# EUROPEAN PATENT APPLICATION

(11) **EP 4 467 388 A1**
(43) Date of publication of application: **27.11.2024**
(21) Application number: 23175549.7
(22) Date of filing: 26.05.2023
(51) Int. Cl.: B60L 50/64, B60L 58/19, H01M 10/42, H01M 50/269, H01M 50/284, H01M 50/298

(54) **CONFIGURATION UNIT FOR BATTERY SYSTEM**

(71) Applicant: VOLVO TRUCK CORPORATION, 405 08 Göteborg (SE)
(72) Inventor: GUERRERO, Jose, 411 28 GÖTEBORG (SE); DUTT, Devraj, 414 56 GÖTEBORG (SE)
(74) Representative: Ström & Gulliksson AB

(57) **Abstract**

A configuration unit (**40**) for connecting one or more battery pack **(B1, B2**, **B3**) to a battery management system (**30**) in a battery system (**10**) for a vehicle, the configuration unit (**40**) being configured to transfer power between the battery management system (**30**) and the one or more battery pack (**B1, B2**, **B3**) and to be mounted to the one or more battery packs **(B1, B2**, **B3**), the configuration unit (**40**) comprising:
- a system connection interface (**70**) configured to be releasably connected to the battery management system (**30**), and
- a pack connection interface (**80**) configured to be releasably connected to the one or more battery pack (**B1**, **B2**, **B3**).

## Description

### TECHNICAL FIELD

The disclosure relates generally to battery systems. The disclosure may be applied to vehicles but it may however also be applied to stationary implementations or similar. In particular aspects, the disclosure relates to a configuration unit for a battery system for a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Due to the often limited battery capacity of the battery packs of a vehicle and in particular electric vehicles, it is of great importance to maximize the voltage provided by the battery packs. Therefore, battery packs are often connected in series.

However, a battery system designed for a maximized voltage may be difficult to re-configure for other applications or situations. For example, if some of the battery packs are removed, the charge provided by the battery system will be substantially reduced.

In order to address this issue, heavy duty contactor switches has been utilized in order to adapt the connections between the battery management system and battery packs. However, such contactor switches have been proven to be expensive and results in a more complex battery system.

The present inventors have realized that there is a need for an improved battery system.

### SUMMARY

According to a first aspect of the disclosure, a configuration unit for connecting one or more battery pack to a battery management system in a battery system of a vehicle is provided. The configuration unit is configured to transfer power between the battery management system and the one or more battery pack and to be mounted to the one or more battery packs. The configuration unit comprises a system connection interface configured to be releasably connected to the battery management system, and a pack connection interface configured to be releasably connected to the one or more battery pack. The first aspect of the disclosure may seek to achieve a more cost-efficient and non-complex reconfigurable battery system. A technical benefit may include that the configuration unit enables a battery management system to be connected to various battery pack configurations by means of interchanging the configuration unit.

Optionally in some examples, including in at least one preferred example, the pack connection interface may be configured to be connected to two or more battery packs. The pack connection interface may be configured to interconnect the two or more battery packs. A technical benefit may include that the connection between the battery packs may be obtained by the configuration unit, whereby the entire battery system may be reconfigured in a non-complex and cost-efficient manner.

Optionally in some examples, including in at least one preferred example, the pack connection interface may be configured to interconnect at least two of the two or more battery packs in series. A technical benefit may include that the configuration unit enables an efficient and simple way of serially connecting the battery packs to each other, thereby potentially improving the voltage provided by the battery system.

Optionally in some examples, including in at least one preferred example, the pack connection interface may be configured to interconnect at least two of the two or more battery packs in parallel. A technical benefit may include that the configuration unit enables an efficient and simple way of connecting the battery packs to each other in parallel, thereby potentially improving the capacity of the battery system.

Optionally in some examples, including in at least one preferred example, the pack connection interface may comprise one or more pack connections, wherein the one or more pack connection may be configured to be connected to one of the one or more battery packs.

Optionally in some examples, including in at least one preferred example, the pack connections may be arranged on a distance from each other such that a gap is formed between said pack connections. A technical benefit may include that the gap mitigates the risk for short-circuiting or electric arcing.

Optionally in some examples, including in at least one preferred example, the distance may be larger than 0,05 m and preferably larger than 0,1 m.

Optionally in some examples, including in at least one preferred example, the one or more pack connections may be provided as a plug or socket connection.

Optionally in some examples, including in at least one preferred example, the configuration unit may be provided as a plate configured to be mounted on the one or more battery packs. A technical benefit may include that a more space-efficient and cost efficient battery system may be achieved. Another technical benefit may include that the mounting of configuration unit in the form of a plate to the one or more battery packs is simple and user friendly.

Optionally in some examples, including in at least one preferred example, the configuration unit may further comprise a mounting structure adapted to receive and retain the one or more battery packs. A technical benefit may include that the structure for mechanically securing the battery packs is provided in the configuration unit, making the installation process easier, more cost-efficient and faster.

Optionally in some examples, including in at least one preferred example, the configuration unit may comprise a configuration unit computer system comprising configuration unit processing circuitry configured to obtain parameter data associated with one or more operational parameters of the configuration unit and/or the one or more battery packs. A technical benefit may include that the configuration unit while being connected to the battery packs may be utilized for monitoring the status of the configuration unit itself or the battery packs even without being connected to a battery management system. This may be particularly beneficial during transportation.

Optionally in some examples, including in at least one preferred example, the parameter data may comprise at least one of: temperature data, current data, voltage data, state of charge data, continuity data and pressure data.

Optionally in some examples, including in at least one preferred example, the configuration unit computer system may be configured to be operatively connected to a computing device and transmit status data to said computing device based on the parameter data. A technical benefit may include that an external device with a graphical interface may be utilized to monitor the status of the configuration unit and the battery packs even when not being connected to a battery management system. This may be particularly beneficial during transportation.

According to a second aspect of the disclosure, a battery system for a vehicle is provided. The battery system comprises a battery management system, one or more battery packs and the configuration unit. The second aspect of the disclosure may seek to achieve a cost-efficient and easily reconfigurable battery system. A technical benefit may include that the battery management system may be connectable to various types of battery pack configuration in a simple manner by means of the configuration unit.

Optionally in some examples, including in at least one preferred example, the one or more battery packs may be arranged in a battery pack configuration and the configuration unit may be interchangeable to accommodate for connecting the battery management system to different battery pack configurations. A technical benefit may include that the configuration unit may be interchanged to connect the battery management system to various battery configurations.

Optionally in some examples, including in at least one preferred example, the configuration unit may be interchangeable such that a first configuration unit may be interchangeable with a second configuration unit, wherein the first configuration unit may be configured to be connected to a first battery pack configuration and the second configuration unit may be configured to be connected to a second battery pack configuration.

Optionally in some examples, including in at least one preferred example, the first configuration unit may be configured to be connected to a first battery pack configuration and the second configuration unit may be configured to be connected to a second battery pack configuration such that the same output voltage is provided by the first and second battery pack configuration. A technical benefit may include that the battery system may be adapted to be utilized in a vehicle for multiple types of battery packs being available since the configuration unit may enable the same voltage to be provided by the battery system.

Optionally in some examples, including in at least one preferred example, the first configuration unit may be configured to connect the first battery pack configuration to the battery management system and the second configuration unit may be configured to connect the second battery pack configuration to the battery management system.

Optionally in some examples, including in at least one preferred example, the battery system may comprise two or more battery packs distributed along an axis and the configuration unit may be arranged to extend along the axis and configured to be mounted on said two or more battery packs. A technical benefit may include that the battery system may be easily installed and reconfigured as the configuration unit may be mounted on top of the battery packs.

Optionally in some examples, including in at least one preferred example, the battery management system may comprise a computer system. The computer system may comprise processing circuitry configured to cause control of the power transfer between the one or more battery packs and the battery management system.

Optionally in some examples, including in at least one preferred example, the processing circuitry may be configured to obtain parameter data associated with one or more operational parameters of the battery system.

Optionally in some examples, including in at least one preferred example, the parameter data may comprise at least one of: temperature data, current data, voltage data, state of charge data, continuity data and pressure data.

Optionally in some examples, including in at least one preferred example, the battery system may be a propulsion battery system configured to power the propulsion of the vehicle.

According to a third aspect of the disclosure, a vehicle is provided. The vehicle may comprise the battery system. The third aspect of the disclosure may seek to provide a vehicle with a more easily reconfigurable battery system. A technical benefit may include that the battery system may be reconfigured to accommodate various battery packs and battery pack configurations.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary battery system according to an example.
**FIG. 2** is an exemplary battery system according to an example.
**FIG. 3** is an exemplary battery system according to an example.
**FIG. 4** is an exemplary battery system according to an example.
**FIG. 5** is an exemplary battery system according to an example.
**FIG. 6** is an exemplary battery system according to an example.
**FIG. 7** is a schematic diagram of an exemplary computer system of a battery management system for implementing examples disclosed herein, according to an example.
**FIG. 8** is a schematic diagram of an exemplary configuration unit computer system of a configuration unit for implementing examples disclosed herein, according to an example.

### DETAILED DESCRIPTION

The detailed description set forth below provides information and examples of the disclosed technology with sufficient detail to enable those skilled in the art to practice the disclosure.

A common issue with battery systems, in particular within the field of vehicles, is that adapting the battery system to provide a desired voltage is a complex and expensive process. In order to maximize the voltage, the battery packs may be serially connected. However, this makes it challenging to adapt the number of battery packs or replace some of the battery packs of the battery system.

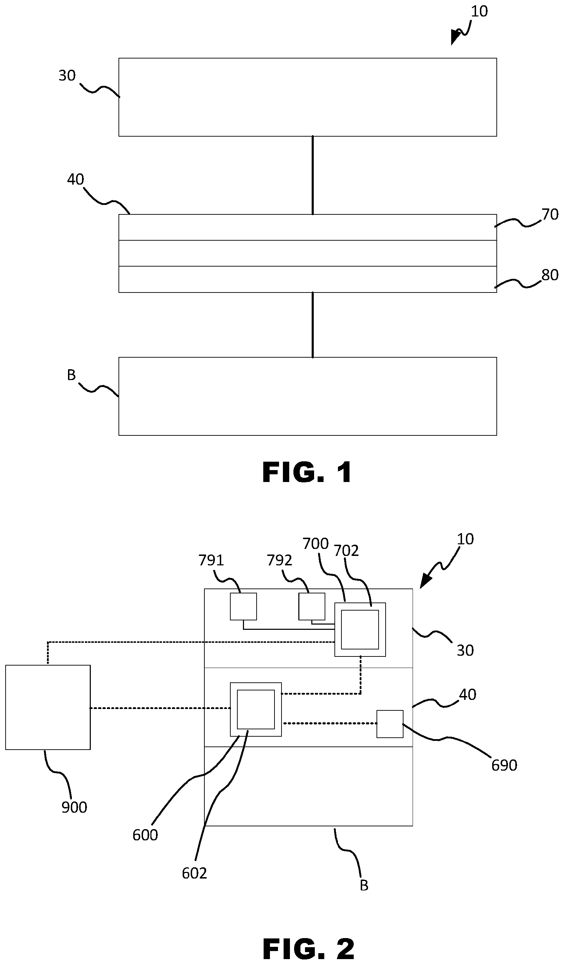

**FIG. 1** is an exemplary battery system for a vehicle according to an example. The battery system **10** comprises a configuration unit **40** for connecting one or more battery packs **B** to a battery management system **30** in the battery system **10** for a vehicle. The configuration unit **40** is configured to transfer power between the battery management system **30** and the one or more battery pack **B.** The configuration unit 40 is configured to be mounted to the one or more battery packs **B.**

The configuration unit **40** comprises a system connection interface **70.** The system connection interface **70** is configured to be releasably connected to the battery management system **30.**

The configuration unit **40** comprises a pack connection interface **80.** The pack connection interface **80** is configured to be releasably connected to the one or more battery packs **B.**

The configuration unit **40** provides an interface between the battery management system 30 and the one or more battery pack **B** allowing for adaptation of the battery system as the configuration unit **40** may be changed in a simple manner to accommodate for different configurations of the one or more battery pack **B.**

The configuration unit **40** may be considered a connection interface device. Hence, throughout the detailed description, the configuration unit 40 may interchangeably be considered a connection interface device.

Connect may herein refer to electrically connect. Thus, the configuration unit **40** may be for electrically connecting the battery management system **30** and the one or more battery pack **B.**

The configuration unit **40** may be configured to connect the battery management system **30** and the one or more battery pack **B.** The configuration unit **40** may be configured to connect the battery management system **30** and the one or more batter pack **B** to thereby form the battery system **10.**

The configuration unit **40** may be configured to be releasably mechanically and electrically connected to the battery management system **30** and the one or more battery pack **B.**

The battery system **10** may be a battery system for a vehicle. The battery system **10** may hence be a vehicle battery system. In one example, the battery system **10** may be configured to power the propulsion of the vehicle, in whole or partially. The battery system **10** may hence be propulsion battery system.

**FIG. 2** depicts a battery system **10** according to an example.

The configuration unit **40** may comprise a configuration unit computer system **600.** The configuration unit computer system **600** may comprise configuration unit processing circuitry **602.** The configuration unit processing circuitry **602** may be configured to obtain parameter data. The parameter data may be associated with one or more operational parameters of the configuration unit **40.** Additionally or alternatively, the configuration unit **40** may be configured to obtain parameter data associated with one or more operational parameters of the one or more battery packs **B.**

The configuration unit processing circuitry **602** may, upon the configuration unit **40** being connected to the one or more battery packs **B**, be configured to obtain the parameter data associated with one or more operational parameters of the one or more battery pack **B.**

The parameter data may comprise at least one of temperature data, current data, voltage data, state of charge data, continuity data and pressure data.

The temperature data may be associated with the temperature of the surroundings of the configuration unit **40** and/or the one or more battery packs **B**, the temperature of the configuration unit **40** and/or the temperature of the one or more battery packs **B.**

The current data may be associated with the current generated by the one or more battery packs **B** and/or the current in the circuits of the configuration unit **40.**

The voltage data may be associated with the voltage generated by the one or more battery packs **B** and/or the voltage in the circuits in the configuration unit **40.**

The state of charge data may be associated with the state of charge of the one or more battery packs **B.**

The continuity data may be associated with the electrical continuity of the one or more batteries **B** and/or the circuits in the configuration unit **40.**

The pressure data may be associated with the air pressure in the surroundings of the one or more battery pack **B** and/or the configuration unit 40 or the pressure inside the one or more battery packs **B.**

It may also be envisioned that the configuration unit processing circuitry **602** may be configured to obtain parameter data associated with one or more operational parameters of the battery management system **30.**

The configuration unit processing circuitry **602** may be operatively connected to one or more sensors **690.** The one or more sensors **690** may be configured to monitor the one or more operational parameters of the configuration unit **40** and/or one or more battery pack **B.** The one or more sensors **690** may comprise a voltage sensor, current sensor, pressure sensors temperature sensor, a continuity sensor such as a multimeter and/or a state of charge sensor.

The configuration unit processing circuitry **602** may be configured to obtain the parameter data from the one or more sensors **690.**

The battery system **10** may comprise the one or more sensors **690.** In one example, the configuration unit **40** may comprise the one or more sensors **690.** Thus, the monitoring functionality may be fully integrated in the configuration unit **40**, allowing for monitoring of the parameters without requiring modifications to an existing battery pack.

The configuration unit computer system **600** may be configured to be operatively connected to a computing device **900.** The configuration unit computer system **500** may be configured to transmit status data to the computing device **900** based on the parameter data.

The status data may be associated with the status of the one or more battery pack **B** and/or the configuration unit **40.** For example, the status data may comprise an alert if the parameter data indicates an operational parameter of the one or more battery pack **B** and/or the configuration **40** is outside a reference interval. Thus, if the data obtained from the one or more sensors **690** indicates a value of the operational parameter outside a set interval, the status data may comprise an alert. The computing device **900** may comprise a user interface such as a tactile user interface or graphical user interface configured to provide an indication to a user based on the status data.

To exemplify, during transportation of the one or more battery packs **B**, wherein the configuration unit **40** is connected to the one or more battery packs **B** and said one or more battery packs **B** and configuration **40** is not connected to the battery management system **30**, the configuration unit computer system **900** may be configured to monitor the operational data and issue an alert to a user via the computing device. Thereby, faulty battery packs can be identified during transportation.

The computing device **900** may be any type of conventional computing device such as a personal computer, smartphone or tablet. The configuration unit **600** may be configured to transmit status data to said computing device **900** by means of any type of conventional connection such a wired or wireless connection. Suitable wired connections may for example include USB and Ethernet. Suitable wireless connection may for example include Wi-Fi, Bluetooth, NFC or a mobile network (for example GSM, 3G, 4G, 5G).

The battery system **10** comprises the battery management system **30.** As the skilled person is well-aware, the purpose of the battery management system **30** may be configured to manage and monitor the charging and discharging of the one or more battery packs **B.**

Further referencing **FIG. 2**, the battery management system 30 may comprise a computer system **700.** The computer system **700** may comprise processing circuitry **702.** The processing circuitry **702** may be configured to cause control of the power transfer between one or more battery packs **B** and the battery management system **30.**

The processing circuitry **702** may be configured to obtain parameter data associated with one or more operational parameters of the battery system **10.** The parameter data may comprise at least one of: temperature data, current data, voltage data, state of charge data, continuity data and pressure data.

The computer system **700** may be configured to be operatively connected to one or more sensors configured to monitor the one or more operational parameters of the battery system **10.** The one or more sensors may be the previously mentioned one or more sensors **690.** Additionally or alternatively, other sensors only operatively connected to the battery management system **30** may be utilized.

The battery management systems are well-known in the prior art and will therefore not be explained in great detail. In short, the battery management system **30** may comprise an analog-to-digital converter system (ADC) **791.** The analog-to-digital converter system may be configured to convert analog data from the one or more battery pack **B** and/or the configuration unit **40** to digital data. The computer system **700** may be configured to obtain said digital data. The analog-to-digital data converter system **791** may be configured to be operatively connected to the computer system **700** and the aforementioned one or more sensors. The analog-to-digital data converter system **791** may be configured to convert analog data from said one or more sensors to digital data, whereby the computer system **700** may be configured to obtain said digital data.

The battery management system **30** may comprise protection circuitry **792.** The protection circuitry **792** may be configured to be connected, e.g. electrically connected, to the one or more battery pack **B.** The protection circuitry **792** may be configured to provide protection from the one or more battery pack overcharging, over-discharging and/or short-circuiting.

The protection circuitry **792** may comprise voltage monitoring circuitry. The voltage monitoring circuitry may be configured to measure the voltage of the one or more battery pack **B** and ensure that it stays within safe operating limits. If the voltage exceeds the predefined threshold, the voltage monitoring circuitry may be configured to disconnect the one or more battery pack **B** from the load to prevent overcharging.

The protection circuitry **792** may comprise current monitoring circuitry. The current monitoring circuitry may be configured to measure current of the one or more battery pack **B** and ensure that it stays within safe operating limits. If the current exceeds the predefined threshold, the current monitoring circuitry may be configured to disconnect the one or more battery pack **B** from the load to prevent overcurrent.

The protection circuitry **792** may comprise temperature monitoring circuitry. The temperature monitoring circuitry may be configured to measure the temperature of the one or more battery pack **B** and ensures that it stays within safe operating limits. If the temperature exceeds the predefined threshold, the temperature monitoring circuitry may be configured to disconnect the one or more battery pack **B** from the load to prevent thermal runaway.

The protection circuitry **792** may comprise overvoltage protection circuitry. The overvoltage protection circuitry may be configured to protect the one or more battery pack **B** from damage due to overcharging. If the voltage exceeds the predefined threshold, the overvoltage protection circuitry may be configured to disconnect the one or more battery pack **B** from the charging source to prevent overcharging.

The protection circuitry **792** may comprise undervoltage protection circuitry. The undervoltage protection circuitry may be configured to protect the one or more battery pack **B** from damage due to over-discharging. If the voltage drops below the predefined threshold, the undervoltage protection circuitry may be configured to disconnect the one or more battery pack B from the load to prevent over-discharging.

The protection circuitry **792** may comprise overcurrent protection circuitry. The overcurrent protection circuitry may be configured to protect the one or more battery pack **B** from damage due to excessive current flow. If the current exceeds the predefined threshold, the overcurrent protection circuitry may be configured to disconnect the one or more battery pack **B** from the load to prevent overcurrent.

The protection circuitry **792** may comprise short circuit protection circuitry. The short circuit protection circuitry may be configured to protect the one or more battery pack **B** from damage due to a short circuit. If a short circuit occurs, the short circuit protection circuitry may be configured to disconnect the one or more battery pack **B** from the load to prevent damage to the battery.

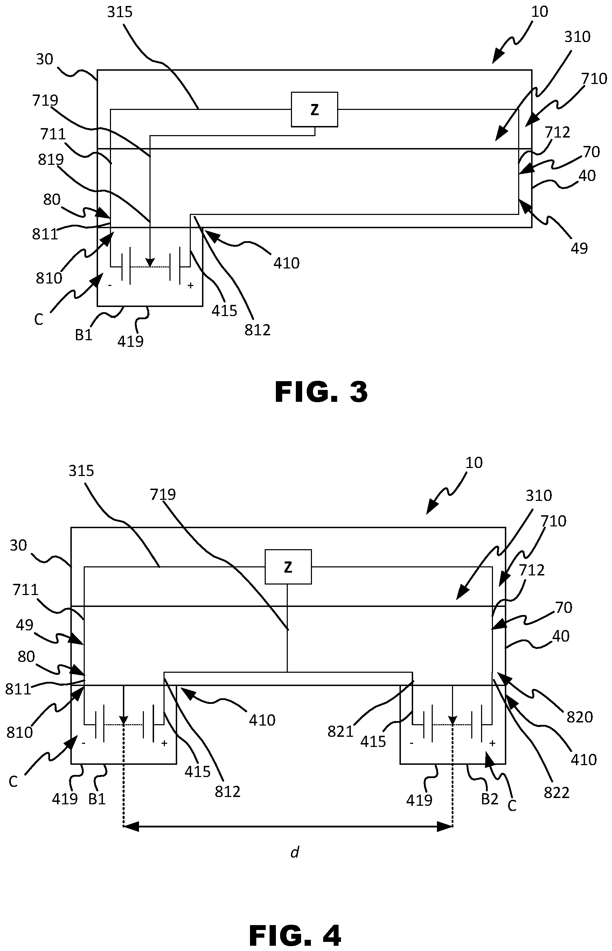

**FIGs. 3-5** depicts examples of a battery system **30** comprising a configuration unit **40.**

In the example of **FIG. 3**, the configuration unit **40** is configured to be releasably connected to a single battery pack **B1.** The configuration unit **40** may thus be configured to connect the battery management system **30** with a single battery pack **B1.**

In the example of **FIG. 4**, the configuration unit **40** is configured to be releasably connected to two battery packs **B1**, **B2.** The configuration unit **40** may thus be configured to connect the battery management system **30** with two battery packs **B1**, **B2.**

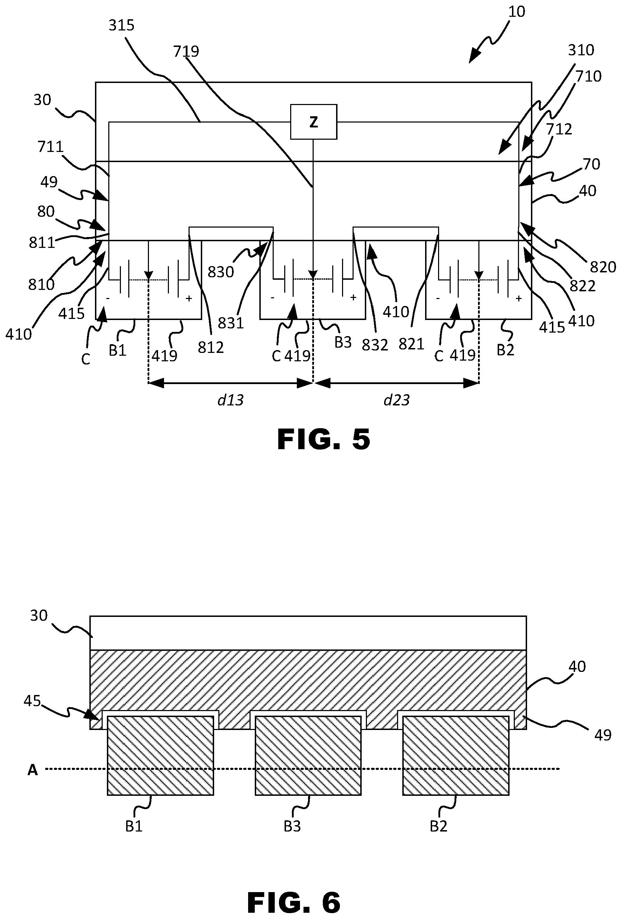

In the example of **FIG. 5**, the configuration unit **40** is configured to be releasably connected to three battery packs **B1**, **B2**, **B3**. The configuration unit **40** may thus be configured to connect the battery management system **30** with three battery packs **B1**, **B2**, **B3.**

In the depicted example, a load **Z** is connected, e.g. electrically connected, to the battery system **10.** The load **Z** may be connected to the battery management system **30.** The load **Z** may thus be connected to the one or more battery pack **B1**, **B2**, **B3** via the battery management system **30** and the configuration unit **40.**

The load **Z** may be a negative load or a positive load depending on whether the one or more battery packs **B1**, **B2**, **B3** being discharged to power the load **Z** or being charged by the load **Z.**

The battery management system **30** may comprise a system connector arrangement **310.** The system connector arrangement **310** may be configured to be releasably connected to the configuration unit **40**, i.e. the system connection interface **70** of the configuration unit **40.** The system connector arrangement **310** may be configured to be releasably electrically and mechanically connected to the configuration unit **40**, i.e. the system connection interface **70** of the configuration unit **40.**

The battery management system **30** may comprise system wiring **310.** The system wiring **310** may be configured to be connected to the load **Z.** The system wiring **310** may configured to be electrically connected to the load **Z.** The system wiring **310** may be configured to electrically connect the system connector arrangement **310** with the load **Z** to transfer currents between the system connector arrangement **310** and the load **Z.**

The system connection interface **70** may comprise one or more system connections **710.** The one or more system connections **710** may be configured to be connected to the battery management system **30.**

The one or more system connections **710** may be provided as a plug or socket connection. Thus, the one or more system connections **710** and the system connector arrangement **310** may be configured to form a plug socket connection. Alternatively, the one or more system connections and the system connector arrangement **310** may form any other conventional connection such as a pin connection or a contactor connection.

Preferably, the system connector arrangement **310** may comprise a single connector. The configuration unit **40** may thus be configured to be connected to the single connector. The single connector allows for a less complex and easier way to connect the configuration unit to the battery management system **30.**

Notably, the battery management system **30** may be associated with the vehicle. Generally, the system connector arrangement **310** may be a fix interface of the vehicle. Thus, the configuration unit **40** may be configured to be connected to the system connector arrangement **310** already present on the vehicle. Accordingly, in the event of a first configuration unit **40** being replaced, the second configuration unit **40** may comprise a system connection interface **70** corresponding to the system connector arrangement **310** of the first configuration unit **40** to enable connection to the battery management system **30.** Worded differently, the configuration unit **40** may be interchangeable to enable different battery pack configurations to be connected to the battery management system **30**, i.e. the system connector arrangement **310** of the battery management system **30.**

The one or more system connections **710** may comprise a first terminal **711** and a second terminal **712.** The first terminal **711** may be a negative terminal and the second terminal **712**, may be a positive terminal.

Further referencing **FIGs. 3-5****,** the configuration unit **40** may be configured to accommodate for connection to an arbitrary and plausible number of battery packs **B.**

The one or more battery packs **B1**, **B2**, **B3** may be arranged in a battery pack configuration. The configuration unit **40** may be interchangeable to accommodate for connecting the battery management system **30** to different battery pack configurations.

Each configuration of the one or more battery packs **B1**, **B2**, **B3** may be associated with a number of battery packs and a disposition of the one or more battery packs.

The configuration unit **40** may be interchangeable such that a first configuration unit is interchangeable with a second configuration unit. The first configuration unit may be configured to be connected to a first battery pack configuration unit. The second configuration unit may be configured to be connected to a second battery pack configuration.

The first configuration unit may be configured to be connected to a first battery pack configuration and the second configuration unit may be configured to be connected to a second battery pack configuration such that the same output voltage is provided by the first and second battery pack configuration.

Accordingly, the battery system **10** may provide the same voltage regardless of the configuration of the one or more battery packs **B1**, **B2**, **B3** due to the configuration unit **40.** This may be achieved by configuration unit **40** connecting the one or more battery packs of the battery pack configuration.

In one example, the battery system **10** may comprise more than one configuration unit **40.** It may thus be envisioned that the battery system **10** may comprise the first and second configuration unit. In one example, the battery system **10** may comprise the first and second configuration unit, the first and second configuration unit being interchangeable.

In one example, the battery system **10** may comprise a plurality of configuration units, whereby each configuration unit may be configured to be connected to one or more of the one or more battery packs **B1**, **B2**, **B3**. The configuration units may each constitute a configuration unit in accordance with any of the embodiments described herein.

Referencing **FIGs. 3-5****,** the first and second configuration unit may also be interchangeable with a third configuration unit configured to be connected to a third battery pack configuration.

The first configuration unit may be configured to be connected to a first battery pack configuration with a single battery pack **B1** (in accordance with the example depicted in **FIG. 3**). The second configuration unit may be configured to be connected to a second battery pack configuration with two battery packs **B1**, **B2** (in accordance with the example depicted in **FIG. 4**). The third configuration unit may be configured to be connected to a third battery pack configuration with three battery packs **B1**, **B2**, **B3** (in accordance with the example depicted in **FIG. 5**).

The one or more battery packs **B1**, **B2**, **B3** may each comprise one or more battery cells **C.** The one or more battery cells **C** may be connectable to the configuration unit **40.** The one or more battery cells **C** may be electrically connectable to the configuration unit **40.**

The one or more battery packs **B1**, **B2**, **B3** may comprise a battery connector arrangement **410.** The battery connector arrangement **410** may be configured to be releasably connected to the configuration unit **40**, i.e. the pack connection interface **80** of the configuration unit **40.** The battery connector arrangement **410** may be configured to be releasably electrically and mechanically connected to the configuration unit **40**, i.e. the pack connection interface **80** of the configuration unit **40.**

The one or more battery cells **C** may be connected to, i.e. electrically connected to, the battery connector arrangement **410** via battery wiring **415.** The battery wiring **415** may be configured to transfer currents between the battery connector arrangement **410** and the one or more battery cells **C.**

The one or more battery pack **B1**, **B2**, **B3** may each comprise a battery housing **419.** The one or more battery cells **C** may be arranged inside said battery housing **419.** The battery connector arrangement **410** may be arranged in said battery housing **419** such that it is accessible for connecting to the pack connection interface **80.** The battery wiring **415** may be arranged inside the battery housing **419.**

It may further be envisioned that the battery pack may comprise other components such as control units, sensors etc.

The pack connection interface **80** may comprise one or more pack connections **810**, **820**, **830**. The one or more pack connections **810**, **820**, **830** may be configured to be connected to the one or more battery packs **B1**, **B2**, **B3**.

The one or more pack connections **810, 820, 830** may be provided as a plug or socket connection. Thus, the one or more pack connections **810**, **820**, **830** and the battery connector arrangement **410** may be configured to form a plug socket connection. Alternatively, the one or more pack connections and the battery connector arrangement **410** may form any other conventional connection such as a pin connection or a contactor connection.

The pack connection **810, 820, 830** may comprise a first terminal **811, 821, 831** and a second terminal **812, 822, 832.** The first terminal **811, 821, 831** may be a negative terminal and the second terminal **812, 822, 832** may be a positive terminal.

As will be further described later on, each pack connection may comprise one or more first terminal and one or more second terminal. Preferably, each terminal of the pack connection **810**, **820**, **830** of the battery pack may be arranged such that a safety distance is provided between each terminal. Thus, the one or more first terminal **811**, **821**, **831** and the one or more second terminal **812**, **822**, **832** of each pack connection **810**, **820**, **830** may be distributed such that a safety distance is provided between said first and second terminals of each pack connection **810**, **820**, **830**. Advantageously, the one or more battery packs **B** may be transported together with the configuration unit **40.** The configuration unit **40** may thus be configured to make the battery connector arrangement **410**, e.g. the connectors/poles of the battery connector arrangement, inaccessible. Thereby, the safety is improved due to the risk for accidental short circuiting being mitigated.

Further referencing **FIGs. 3-5**, the configuration unit **40** may comprise configuration unit wiring **49.** The configuration unit wiring **49** may be configured to electrically connect the pack connection interface **80** and the system connection interface **70.** The configuration unit wiring **49** may be configured to electrically connect the one or more pack connections **810**, **820**, **830** and the one or more system connections **710.**

As depicted in the examples of **FIGs. 4-5**, the configuration unit **40** may be configured to be connected to two or more battery packs **B1**, **B2**, **B3**. The configuration unit **40** may be configured to interconnect the two or more battery packs **B1**, **B2**, **B3**.

Accordingly, the pack connection interface **80** may be configured to be connected to two or more battery packs **B1**, **B2**, **B3**. The pack connection interface **80** may be configured to interconnect the two or more battery packs **B1**, **B2**, **B3.** Worded differently, the pack connection interface **80** may be configured to electrically connect the two or more battery packs **B1**, **B2**, **B3** to each other.

In one example, the pack connection interface **80** may be configured to interconnect at least two of the two or more battery packs **B1**, **B2**, **B3** in series. Thus, the pack connection interface **80** may be configured to serially connect at least two or more battery packs of the two or more battery packs **B1**, **B2**, **B3**. Depending on the desired voltage of the battery system **10**, pack connection interface **80** may be configured to serially connect all or only some of the two or more battery packs **B1**, **B2**, **B3**.

In one example, the pack connection interface **80** may be configured to interconnect at least two of the two or more battery packs **B1**, **B2**, **B3** in parallel. Thus, the pack connection interface **80** may be configured to parallely connect at least two or more battery packs of the two or more battery packs **B1**, **B2**, **B3**. Depending on the desired voltage of the battery system **10**, pack connection interface **80** may be configured to parallely connect all or only some of the two or more battery packs **B1**, **B2**, **B3**.

The battery pack **B1**, **B2**, **B3** may each comprise a plurality of battery cells **C.** In one example, the configuration unit **40** may be configured to interconnect the plurality of battery cells C of the battery pack **B1**, **B2**, **B3**. The pack connection interface **80** may thus be configured to be connected to the plurality of battery cells **C** of the battery pack **B1**, **B2**, **B3**. The pack connection interface **80** may be configured to connect the plurality of battery cells **C** of the battery pack **B1**, **B2**, **B3** in series and/or in parallel.

The configuration unit **40** may be configured to interconnect the battery cells **C** of the one or more battery packs **B1**, **B2**, **B3** and/or the one or more battery **B1**, **B2**, **B3**. In one example, a first configuration unit **40** may be configured to be interchangeable with a second configuration unit **40** such that the same voltage is provided by means of the first and/or second configuration unit interconnecting the battery cells **C** of the one or more battery packs **B1**, **B2**, **B3** and/or the one or more battery packs **B1**, **B2**, **B3**.

Depending on the design of the battery pack **B1**, **B2**, **B3**, the battery cells **C** may be independently connected to the pack connection interface **410** of the battery pack **B1**, **B2**, **B3** or may be configured in one or more clusters, the one or more clusters being connected to the pack connection interface **410** of the battery pack **B1**, **B2**, **B3**.

In a battery pack with individual battery cells **C** independently connected to the pack connection interface **80**, the pack connection interface **80** may be configured to be connected to each individual battery cell **C.** Hence, the pack connection interface **80** may comprise a plurality of first terminals **811**, **821**, **831** and second terminals **812**, **822**, **832**. A first and second terminal of the pack connection interface **80** may thus be configured to be connected to each of the individual battery cells **C** of the battery pack **B1**, **B2**, **B3**.

In a battery pack wherein the battery cells **C** are configured in one or more clusters, the battery cells **C** of the one or more clusters may be connected to each other and share a connection interface connected to the pack battery connector arrangement **410.** Within a cluster, the battery cells **C** may be connected to each other in series and/or in parallel. Hence, a first and second terminal may be configured to be connected to each cluster of battery cells **C** of the battery pack **B1**, **B2**, **B3**.

Commonly, the battery cells **C** of the battery pack **B1**, **B2**, **B3** are arranged in strings. Each string may comprise a plurality of serially connected battery cells **C.** Preferably, the pack connection interface **80** may be configured to be connected to each string of battery cells **C** of the one or more battery pack **B1**, **B2**, **B3**.

Notably, the examples of battery systems **10** depicted in **FIGs. 3-5** may all provide the same voltage.

To exemplify, each battery pack may comprise the same number of battery cells **C.** For example, each battery pack may comprise 600 battery cells **C.** The battery cells C may be configured in clusters. To exemplify, the battery cells may be arranged in 12 clusters of 50 battery cells C. The 12 clusters may be in the form of strings, i.e. serially connected battery cells C. Thus, each battery pack B1, B2, B3 may comprise 12 clusters of 50 battery cells C connected in series. The pack connection interface 80 may be configured to be connected to each cluster.

In the example of FIG. 3, one battery pack B1 is connected to the configuration unit 40 and the battery management system 30. The configuration unit 40 is configured to be connected to the battery cells C of the first battery pack B1 and a central tap of the battery pack **B1** such that the battery cells **C** are connected in series and/or parallel. Due to the central tap, the battery system will provide the voltage associated with 300 battery cells, e.g. 300s2p (300 series, 2 parallel). Hence, the configuration unit **40** may be configured to connect a first group of 6 clusters of 50 serially connected battery cells **C** in series and a second group of 6 clusters of 50 serially connected battery cells **C** in series. The configuration unit **40** may be further configured to connect said first and second group in parallel in order for the battery system to provide the voltage associated with 300 battery cells **C.**

In the example of **FIG. 4**, two battery packs **B1**, **B2** are connected to the configuration unit **40** and the battery management system **30.** The configuration unit **40** is configured to be connected to the battery cells **C** of the first and second battery pack B 1, B2. The configuration unit **40** is connected to the battery cells **C** of the first and second battery pack **B1**, **B2** such that the battery cells **C** are connected in series and/or parallel. By means of a central tap in the configuration unit **40**, a quarter of the battery cells C in each battery pack **B1**, **B2** may be connected in series. Thus, the battery system will provide the voltage associated with 300 battery cells, e.g. 150s4p (150 series, 4 parallel) for each battery pack. Hence, the configuration unit **40** may be configured to connect a first group of 3 clusters of 50 serially connected battery cells **C** in series, a second group of 3 clusters of 50 serially connected battery cells **C** in series, a third group of 3 clusters of 50 serially connected battery cells **C** in series and a fourth group of 3 clusters of 50 serially connected battery cells **C** in series. The configuration unit **40** may be further configured to connect said first, second, third and fourth group in parallel in order for the battery system to provide the voltage associated with 300 battery cells **C.**

In the example of FIG. 5, three battery packs **B1**, **B2**, **B3** are connected to the configuration unit **40** and the battery management system **30.** The configuration unit **40** is configured to be connected to the battery cells C of the first, second and third battery pack **B1**, **B2**, **B3**. The configuration unit **40** is connected to the battery cells **C** of the first, second and third battery pack **B1**, **B2**, **B3** such that the battery cells C are connected in series and/or parallel. The configuration unit **40** is configured to be connected to the battery cells **C** of the first, second and third battery pack **B1**, **B2**, **B3** and a central tap of said battery packs **B1**, **B2**, **B3** such that the battery cells **C** are connected in series. Due to the central taps of each battery pack, the battery system will provide the voltage associated with 300 battery cells, e.g. 100s6p (100 series, 6 parallel). Hence, the configuration unit **40** may be configured to connect a first group of 2 clusters of 50 serially connected battery cells **C** in series, a second group of 2 clusters of 50 serially connected battery cells **C** in series, a third group of 2 clusters of 50 serially connected battery cells **C** in series, a fourth group of 2 clusters of 50 serially connected battery cells **C** in series, a fifth group of 2 clusters of 50 serially connected battery cells **C** in series and a sixth group of 2 clusters of 50 serially connected battery cells **C** in series. The configuration unit **40** may be further configured to connect said first, second, third, fourth, fifth and sixth group in parallel in order for the battery system to provide the voltage associated with 300 battery cells **C.**

Referencing **FIG. 4**, the pack connections **810, 820** may be arranged on a distance ***d*** from each other. The pack connections **810, 820** may be arranged on the distance ***d*** from each other such that a gap is formed between said pack connections. The distance may be selected to improve the safety of the battery system by mitigating the risk for short-circuiting or electric arcing.

The distance ***d*** may be larger than 0,05 m. The distance ***d*** may preferably be larger than 0,1 m. The distance ***d*** may be a distance between a center point between the first terminal **811** and the second terminal **812** of the first pack connection **810** and the first terminal **821** and the second terminal **822** of the second pack connection **820.**

Referencing **FIG. 5**, the first pack connection **810**, the second pack connection **820** and the third pack connection **830** may be arranged on a distance ***d*** from each other such that a gap is formed between said pack connections. The first pack connection **810** may be arranged on a distance ***d13*** from the third pack connection **830.** The second pack connection **820** may be arranged on a distance ***d23*** from the third pack connection **830.** The first distance ***d13*** and the second distance ***d23*** may be the same or may differ.

The first distance ***d13*** and the second distance ***d23*** may be larger than 0,05 m. The first distance ***d13*** and the second distance ***d23*** may preferably be larger than 0,1 m.

The first distance ***d13*** may be a distance between a center point of the first pack connection **810** between the first terminal **811** and the second terminal **812** of the first pack connection **810** and a center point of the third pack connection **830** between the first terminal **831** and the second terminal **832** of the third pack connection **830.**

The second distance ***d23*** may be a distance between a center point of the second pack connection **820** between the first terminal **821** and the second terminal **822** of the second pack connection **820** and a center point of the third pack connection **830** between the first terminal **831** and the second terminal **832** of the third pack connection **830.**

It may be envisioned that the pack connection interface may comprise a plurality of pack connections distributed such that there is a distance between each pair of adjacent pack connections. Said distance may preferably be larger than 0,05 m and even more preferably larger than 0,1 m.

Advantageously, the one or more battery packs **B** may be transported together with the configuration unit **40.** The configuration unit **40** may thus be configured to make the battery connector arrangement **410**, e.g. the connectors/poles of the battery connector arrangement, inaccessible. Thereby, the safety is improved due to the risk for accidental short circuiting being mitigated when a plurality of battery packs **B** are transported together with and connected to the configuration unit **40.**

**FIG. 6** depicts a schematic cross-section view of a battery system **10** according to one example.

The configuration unit **40** may be provided as a plate configured to be mounted on the one or more battery packs **B1**, **B2**, **B3**. In the depicted example, the configuration unit **40** is provided as a plate mounted on three battery packs **B1**, **B2**, **B3**. The plate design enables a more space-efficient configuration unit and battery system which is also easy to transport. Furthermore, the plate design may be cheaper to manufacture compared to other designs.

The configuration unit **40** may thus be considered a configuration plate. The plate may be in a metal material.

The configuration unit **40** may comprise a mounting structure **45.** The mounting structure **45** may be adapted to receive and retain the one or more battery packs **B1**, **B2**, **B3**.

Further referencing **FIG. 6**, the mounting structure **45** may comprise one or more engaging portions **49** adapted to engage the one or more battery packs **B1**, **B2**, **B3**. The one or more engaging portions **49** allows for the configuration unit **40** to securely retain the one or more battery packs **B1**, **B2**, **B3** in position.

In the depicted example, the engaging portions **49** are formed by recesses provided in the mounting structure **45.** Each recess is adapted to receive and retain one of the one or more battery units **B1**, **B2**, **B3**. It may however be envisioned that the engaging portions may be designed in other ways as well such as by gripping arms, elastic fastening elements etc.

The configuration unit **40** may be configured to be mounted on the two or more battery packs **B1**, **B2**, **B3**. Two or more battery packs **B1**, **B2**, **B3** may be distributed along an axis A. The configuration unit **40** may be arranged to extend along the axis **A.** The axis **A** may be a horizontally extending axis.

It may be envisioned that the battery packs may be distributed in rows, each extending along a separate axis **A.** In such case, the configuration unit **40** may be mounted on all of the battery packs.

Advantageously, the configuration unit **40** may be mounted on top of the one or more battery packs **B1**, **B2**, **B3**.

Alternatively, the one or more battery packs **B1**, **B2**, **B3** may be arranged on top of the configuration unit **40.** The configuration unit **40** may be mounted to the bottom portion of the one or more battery packs **B1**, **B2**, **B3**.

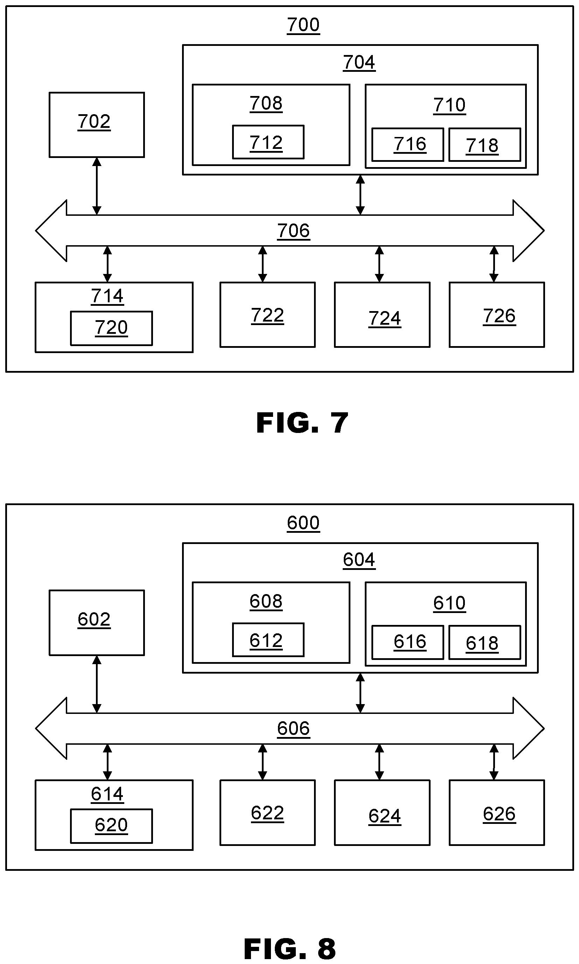

**FIG. 7** is a schematic diagram of a computer system **700** of a battery management system for implementing examples disclosed herein. The computer system **700** is adapted to execute instructions from a computer-readable medium to perform these and/or any of the functions or processing described herein. The computer system **700** may be connected (e.g., networked) to other machines in a LAN, an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702** (e.g., processing circuitry including one or more processor devices or control units), a memory **704**, and a system bus **706.** The computer system **700** may include at least one computing device having the processing circuitry **702.** The system bus **706** provides an interface for system components including, but not limited to, the memory **704** and the processing circuitry **702.** The processing circuitry **702** may include any number of hardware components for conducting data or signal processing or for executing computer code stored in memory 704. The processing circuitry 702 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714**, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710**, which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714**, which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device
interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

**FIG. 8** is a schematic diagram of a configuration unit computer system **600** of a configuration unit for implementing examples disclosed herein. The configuration unit computer system **600** is adapted to execute instructions from a computer-readable medium to perform these and/or any of the functions or processing described herein. The configuration unit computer system **600** may be connected (e.g., networked) to other machines in a LAN, an intranet, an extranet, or the Internet. While only a single device is illustrated, the configuration unit computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The configuration unit computer system **600** may comprise at least one computing device or electronic device capable of including firmware, hardware, and/or executing software instructions to implement the functionality described herein. The configuration unit computer system **600** may include configuration unit processing circuitry **602** (e.g., processing circuitry including one or more processor devices or control units), a configuration unit memory **604**, and a configuration unit system bus **606.** The configuration unit computer system **600** may include at least one computing device having the configuration unit processing circuitry **602.** The configuration unit system bus **606** provides an interface for system components including, but not limited to, the configuration unit memory **604** and the configuration unit processing circuitry **602.** The configuration unit processing circuitry **602** may include any number of hardware components for conducting data or signal processing or for executing computer code stored in the configuration unit memory **604.** The configuration unit processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The configuration unit processing circuitry **602** may further include computer executable code that controls operation of the programmable device.

The configuration unit system bus **606** may be any of several types of bus structures that may further interconnect to a memory bus (with or without a memory controller), a peripheral bus, and/or a local bus using any of a variety of bus architectures. The configuration unit memory **604** may be one or more devices for storing data and/or computer code for completing or facilitating methods described herein. The configuration unit memory **604** may include database components, object code components, script components, or other types of information structure for supporting the various activities herein. Any distributed or local memory device may be utilized with the systems and methods of this description. The configuration unit memory **604** may be communicably connected to the configuration unit processing circuitry **602** (e.g., via a circuit or any other wired, wireless, or network connection) and may include computer code for executing one or more processes described herein. The configuration unit memory **604** may include configuration unit non-volatile memory **608** (e.g., read-only memory (ROM), erasable programmable read-only memory (EPROM), electrically erasable programmable read-only memory (EEPROM), etc.), and configuration unit volatile memory **610** (e.g., random-access memory (RAM)), or any other medium which can be used to carry or store desired program code in the form of machine-executable instructions or data structures and which can be accessed by a computer or other machine with configuration unit processing circuitry **602.** A configuration unit basic input/output system (BIOS) **612** may be stored in the configuration unit non-volatile memory **608** and can include the basic routines that help to transfer information between elements within the configuration unit computer system **600.**

The configuration unit computer system **600** may further include or be coupled to a non-transitory computer-readable storage medium such as the configuration unit storage device **614**, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The configuration unit storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the configuration unit storage device **614** and/or in the configuration unit volatile memory **610**, which may include a configuration unit operating system **616** and/or one or more configuration unit program modules **618.** All or a portion of the examples disclosed herein may be implemented as a configuration unit computer program **620** stored on a transitory or non-transitory computer-usable or computer-readable storage medium (e.g., single medium or multiple media), such as the configuration unit storage device **614**, which includes complex programming instructions (e.g., complex computer-readable program code) to cause the configuration unit processing circuitry **602** to carry out actions described herein. Thus, the computer-readable program code of the configuration unit computer program **620** can comprise software instructions for implementing the functionality of the examples described herein when executed by the configuration unit processing circuitry **602.** In some examples, the configuration unit storage device **614** may be a computer program product (e.g., readable storage medium) storing the configuration unit computer program **620** thereon, where at least a portion of a configuration unit computer program **620** may be loadable (e.g., into a processor) for implementing the functionality of the examples described herein when executed by the configuration unit processing circuitry **602.** The configuration unit processing circuitry **602** may serve as a controller or control system for the configuration unit computer system **600** that is to implement the functionality described herein.

The configuration unit computer system **600** may include a configuration unit input device interface **622** configured to receive input and selections to be communicated to the configuration unit computer system **600** when executing instructions, such as from a keyboard, mouse, touch-sensitive surface, etc. Such input devices may be connected to the configuration unit processing circuitry **602** through the configuration unit input device interface **622** coupled to the configuration unit system bus **606** but can be connected through other interfaces, such as a parallel port, an Institute of Electrical and Electronic Engineers (IEEE) 1394 serial port, a Universal Serial Bus (USB) port, an IR interface, and the like. The configuration unit computer system **600** may include a configuration unit output device interface **624** configured to forward output, such as to a display, a video display unit (e.g., a liquid crystal display (LCD) or a cathode ray tube (CRT)). The configuration unit computer system **600** may include a configuration unit communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

A configuration unit, battery system and vehicle may be provided in accordance with any of the below examples.

Example 1: A configuration unit **40** for connecting one or more battery pack **B1**, **B2**, **B3** to a battery management system **30** in a battery system **10** for a vehicle, the configuration unit **40** being configured to transfer power between the battery management system **30** and the one or more battery pack **B1**, **B2**, **B3** and to be mounted to the one or more battery packs **B1**, **B2**, **B3**, the configuration unit **40** comprising:
- a system connection interface **70** configured to be releasably connected to the battery management system **30**, and
- a pack connection interface **80** configured to be releasably connected to the one or more battery pack **B1**, **B2**, **B3**.

Example 2: The configuration unit **40** of example 1, wherein the pack connection interface **80** is configured to be connected to two or more battery packs **B1**, **B2**, **B3** and said pack connection interface **80** is configured to interconnect the two or more battery packs **B1**, **B2**, **B3**.

Example 3: The configuration unit **40** of example 2, wherein the pack connection interface **80** is configured to interconnect at least two of the two or more battery packs **B1**, **B2**, **B3** in series.

Example 4: The configuration unit **40** of any of examples 2-3, wherein the pack connection interface **80** is configured to interconnect at least two of the two or more battery packs **B1**, **B2**, **B3** in parallel.

Example 5: The configuration unit **40** of any of examples 1-4, wherein the pack connection interface **80** comprises one or more pack connections **810**, **820**, **830**, wherein the one or more pack connection **810**, **820**, **830** are configured to be connected to one of the one or more battery packs **B1**, **B2**, **B3**.

Example 6: The configuration unit **40** of example 5, wherein the pack connections **810**, **820**, **830** are arranged on a distance ***d*** from each other such that a gap is formed between said pack connections **810**, **820**, **830**.

Example 7: The configuration unit **40** of any of examples 1-6, wherein the configuration unit **40** is provided as a plate configured to be mounted on the one or more battery packs **B1**, **B2**, **B3**.

Example 8: The configuration unit **40** of any of examples 1-7, further comprising:
- a mounting structure **45** adapted to receive and retain the one or more battery packs **B1**, **B2**, **B3**.

Example 9: The configuration unit **40** of any of examples 1-8, further comprising:
- a configuration unit computer system **600** comprising configuration unit processing circuitry **602** configured to obtain parameter data associated with one or more operational parameters of the configuration unit **40** and/or the one or more battery packs **B1**, **B2**, **B3**.

Example 10: The configuration unit **40** of example 9, wherein the parameter data comprises at least one of: temperature data, current data, voltage data, state of charge data, continuity data and pressure data.

Example 11: The configuration unit **40** of any of examples 9-10, wherein the configuration unit computer system **600** is configured to be operatively connected to a computing device **900** and transmit status data to said computing device **900** based on the parameter data.

Example 12: A battery system **10** for a vehicle, the battery system (**10**) comprising a battery management system **30**, one or more battery packs **B1**, **B2**, **B3** and the configuration unit **40** of any of examples 1-11.

Example 13: The battery system **10** of example 12, wherein the one or more battery packs **B1**, **B2**, **B3** are arranged in a battery pack configuration and the configuration unit **40** is interchangeable to accommodate for connecting the battery management system **30** to different battery pack configurations.

Example 14: Battery system **10** of example 13, wherein the configuration unit **40** is interchangeable such that a first configuration unit is interchangeable with a second configuration unit, wherein the first configuration unit is configured to be connected to a first battery pack configuration and the second configuration unit is configured to be connected to a second battery pack configuration.

Example 15: Battery system **10** of example 14, wherein the first configuration unit is configured to be connected to a first battery pack configuration and the second configuration unit is configured to be connected to a second battery pack configuration such that the same output voltage is provided by the first and second battery back configuration.

Example 16: Battery system **10** of any of examples 12-15, wherein the battery system **10** comprises two or more battery packs **B1**, **B2**, **B3** distributed along an axis **A** and the configuration unit **40** is arranged to extend along the axis **A** and configured to be mounted on said two or more battery packs **B1**, **B2**, **B3**.

Example 17: Battery system **10** of any of examples 12-16, wherein the battery management system **30** comprises a computer system (**700**), the computer system (**700**) comprising processing circuitry **702** configured to cause control of the power transfer between the one or more battery packs **B1**, **B2**, **B3** and the battery management system **30.**

Example 18: Battery system **10** of example 17, wherein the processing circuitry 702 is configured to obtain parameter data associated with one or more operational parameters of the battery system **10.**

Example 19: The battery system **10** of example 18, wherein the parameter data comprises at least one of: temperature data, current data, voltage data, state of charge data, continuity data and pressure data.

Example 20: A vehicle comprising the battery system **10** of any of examples 12-19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A configuration unit (**40**) for connecting one or more battery pack (**B1**, **B2**, **B3**) to a battery management system (**30**) in a battery system (**10**) for a vehicle, the configuration unit (**40**) being configured to transfer power between the battery management system (**30**) and the one or more battery pack (**B1**, **B2**, **B3**) and to be mounted to the one or more battery packs (**B1**, **B2**, **B3**), the configuration unit (**40**) comprising:
- a system connection interface (**70**) configured to be releasably connected to the battery management system (**30**), and
- a pack connection interface (**80**) configured to be releasably connected to the one or more battery pack (**B1**, **B2**, **B3**).

2. The configuration unit (**40**) of claim 1, wherein the pack connection interface (**80**) is configured to be connected to two or more battery packs (**B1**, **B2**, **B3**) and said pack connection interface (**80**) is configured to interconnect the two or more battery packs (**B1**, **B2**, **B3**).

3. The configuration unit (**40**) of claim 2, wherein the pack connection interface (**80**) is configured to interconnect at least two of the two or more battery packs (**B1, B2**, **B3**) in series.

4. The configuration unit (**40**) of any of claims 2-3, wherein the pack connection interface (**80**) is configured to interconnect at least two of the two or more battery packs (**B1**, **B2**, **B3**) in parallel.

5. The configuration unit (**40**) of any of claims 1-4, wherein the pack connection interface (**80**) comprises one or more pack connections (**810**, **820**, **830**), wherein the one or more pack connection (**810**, **820**, **830**) are configured to be connected to one of the one or more battery packs (**B1**, **B2**, **B3**).

6. The configuration unit (**40**) of claim 5, wherein the pack connections (**810**, **820**, **830**) are arranged on a distance (***d***) from each other such that a gap is formed between said pack connections (**810**, **820**, **830**).

7. The configuration unit (**40**) of any of claims 1-6, further comprising:
- a mounting structure (**45**) adapted to receive and retain the one or more battery packs (**B1**, **B2**, **B3**).

8. The configuration unit (**40**) of any of claims 1-7, further comprising:
- a configuration unit computer system (**600**) comprising configuration unit processing circuitry (**602**) configured to obtain parameter data associated with one or more operational parameters of the configuration unit (**40**) and/or the one or more battery packs (**B1**, **B2**, **B3**).

9. The configuration unit (**40**) of claim 8, wherein the configuration unit computer system (**600**) is configured to be operatively connected to a computing device (**900**) and transmit status data to said computing device (**900**) based on the parameter data.

10. A battery system (**10**) for a vehicle, the battery system (**10**) comprising a battery management system (**30**), one or more battery packs (**B1**, **B2**, **B3**) and the configuration unit (**40**) of any of claims 1-9.

11. The battery system (**10**) of claim 10, wherein the one or more battery packs (**B1**, **B2**, **B3**) are arranged in a battery pack configuration and the configuration unit (**40**) is interchangeable to accommodate for connecting the battery management system (**30**) to different battery pack configurations.

12. The battery system (**10**) of claim 11, wherein the configuration unit (**40**) is interchangeable such that a first configuration unit is interchangeable with a second configuration unit, wherein the first configuration unit is configured to be connected to a first battery pack configuration and the second configuration unit is configured to be connected to a second battery pack configuration.

13. Battery system (10) of any of claim 10-12, wherein the battery system (10) comprises two or more battery packs (**B1**, B2, B3) distributed along an axis (A) and the configuration unit (40) is arranged to extend along the axis (A) and configured to be mounted on said two or more battery packs (**B1**, B2, B3).

14. Battery system (10) of any of claims 10-13, wherein the battery management system (30) comprises a computer system (700), the computer system (700) comprising processing circuitry (702) configured to cause control of the power transfer between the one or more battery packs (**B1**, **B2**, **B3**) and the battery management system (**30**).

15. A vehicle comprising the battery system (**10**) of any of claims 10-14.
